(19) Europäisches Patentamt
European Patent Office
Office européen des brevets

(11) **EP 0 997 088 A1**

(12) **EUROPEAN PATENT APPLICATION**

(43) Date of publication:
03.05.2000 Bulletin 2000/18

(51) Int. Cl.$^7$: **A47B 77/02**, B29C 47/06, B32B 31/30

(21) Application number: 99120875.2

(22) Date of filing: 27.10.1999

(84) Designated Contracting States:
**AT BE CH CY DE DK ES FI FR GB GR IE IT LI LU MC NL PT SE**
Designated Extension States:
**AL LT LV MK RO SI**

(30) Priority: 27.10.1998 US 179448

(71) Applicant:
**Premark RWP Holdings, Inc.**
**Wilmington, Delaware 19801 (US)**

(72) Inventors:
• **Oriseh, Anthony S.**
  **Belton, Texas 76513 (US)**
• **Gearhart, Kenton J.**
  **Moundridge, Kansas 67107 (US)**

(74) Representative:
**Frohwitter, Bernhard, Dipl.-Ing.**
**Patent- und Rechtsanwälte,**
**Possartstrasse 20**
**81679 München (DE)**

(54) **Foam core countertop profile and extrusion system**

(57) A coextrusion system (10) for extruding a foam core countertop profile (12) is disclosed. Generally, the system (10) includes a plurality of hoppers (14,16,18) coupled to conventional drying units (20,22,24), a plurality of extruders (26,28,30) respectively coupled to hoppers (14,16,18), a coextrusion die (32), a calibrator (34), a cooling tank (36), a puller (38) and a cutting assembly (40).

FIG. 1

## Description

### BACKGROUND OF THE INVENTION

#### 1. Field of the Invention

The invention relates to a process and apparatus for extrusion. More particularly, the invention relates to a process and apparatus for extruding a solid surface, foam core countertop profile.

#### 2. Description of the Prior Art

Laminate countertops are commonly manufactured in a multistep process. Specifically, the substrate of the countertop is manufactured and shaped to fit the specific location for which it is designed. Most countertop substrates are manufactured from plywood, particle board, chipboard, etc. which is cut to fit a specific location. The decorative laminate is then applied to the substrate and the countertop is ready for installation.

The process of preparing and installing a countertop is further complicated by the addition of backsplashes and distinct front edges. These additional features must also be incorporated into the countertop during the manufacturing process. As such, common countertops are generally manufactured via a labor intensive, multistep process.

Whether the substrate is manufactured from wood or other support materials makes little difference in the time-consuming nature of preparing a countertop for installation, since the individual components of the countertop must be prepared, cut to size and assembled before the countertop is ready for installation. The multistep process adds considerable expense to the preparation and installation of countertops.

In addition to preparing a countertop using a multistep process, countertops made in accordance with traditional techniques are susceptible to separation occurring between the substrate and the decorative laminate. Further, these countertops are susceptible to separation occurring between seams in the countertop portions. Specifically, the decorative laminate is commonly glued to the substrate during the preparation of the countertop. The use of adhesive in coupling the decorative laminate to the substrate leaves the countertop susceptible to separation between the laminate and the substrate.

The shortcomings of prior techniques for manufacturing a countertop indicate a need for an improved method and apparatus for manufacturing countertops. The present invention provides such a process and apparatus.

### SUMMARY OF THE INVENTION

It is, therefore, an object of the present invention to provide an extrusion system for the production of a countertop. The extrusion system includes an extrusion die having a profile which replicates the shape of a countertop. The extrusion die includes a plurality of extruder entrances through which countertop material is supplied to the extrusion die and a die outlet from which the extruded countertop profile departs.

It is also an object of the present invention to provide an extrusion system wherein the profile is that of a complete countertop and includes a top surface, a backsplash and a front edge.

It is a further object of the present invention to provide a countertop profile manufactured in accordance with a predetermined extrusion process. The extrusion process includes extruding a countertop profile through an extrusion die having a profile which replicates the shape of a countertop, wherein the extrusion die includes a plurality of extruder entrances through which countertop material is supplied to the extrusion die and a die outlet from which the extruded countertop profile departs. The process further includes cooling the extruded countertop profile through a calibrator positioned adjacent the die outlet of the coextrusion die to receive the extruded countertop profile as it exits the coextrusion die, wherein the calibrator includes a calibrator passageway which is substantially the same shape as the extruded countertop profile exiting the extrusion die.

It is another object of the present invention to provide an extruded foam core countertop profile. The countertop includes a foam substrate, a polymeric surfacing layer and an opaque layer positioned between the foam substrate and the polymeric surfacing layer.

It is also an object of the present invention to provide a calibrator for use in the manufacture of extruded products, wherein the extruded product includes a top surface exposed to consumers and a bottom surface which is not viewed by consumers when the extruded product is used for its intended purpose. The calibrator includes an upper calibrator pivotally coupled to a lower stationary calibrator. The upper calibrator and the lower calibrator meet at a position located along the bottom side of the extruded product such that any marking created by meeting of the upper calibrator and the lower calibrator is not seen by a consumer when the extruded product is properly used.

It is a further object of the present invention to provide a coextrusion die adapted for the continuous manufacture of a multilayer product. The die includes a plurality of die plates held together to create a die body, wherein each of the die plates including a profile passageway shaped to conform to the multilayer product to be formed within the coextrusion die. The die also includes at least one flow channel formed between adjacent die plates. The flow channel is in fluid communication with the profile passageway at a first end and an exterior die inlet port such that flow channels couples the profile passageway with at least one material supply member.

It is another object of the present invention to provide a process for the coextrusion of a multilayer product. The process comprises the steps of drying an acrylic material to be used in the extrusion of the multilayer product such that it has a moisture content below 0.05%, drying a substrate material to be used in the extrusion of the multilayer product and coextruding the acrylic material and the substrate material to form the extruded product.

Other objects and advantages of the present invention will become apparent from the following detailed description when viewed in conjunction with the accompanying drawings, which set forth certain embodiments of the invention.

BRIEF DESCRIPTION OF THE DRAWINGS

Figure 1 is a schematic of the present extrusion system.

Figure 2 is a cross-sectional view of a countertop profile extruded in accordance with the present invention.

Figure 3 is a perspective view of a countertop profile extruded in accordance with the present invention.

Figure 4 is a top view of the interface adapters coupled to the coextrusion die.

Figure 5 is a perspective view of the coextrusion die.

Figure 6 is a side view of the coextrusion die.

Figure 7 is an exploded view of the fourth, fifth and sixth coextrusion plates of the coextrusion die.

Figure 8 is an assembled front view of the fourth, fifth, and sixth coextrusion plates.

Figure 9 is a cross-sectional view of the fourth, fifth and sixth coextrusion plates taken along the section IX-IX of Figure 8.

Figure 10 is an exploded view of the first, second and third coextrusion plates of the coextrusion die.

Figure 11 is an assembled front view of the first, second, and third coextrusion plates (die mandrel not shown).

Figure 12 is a cross-sectional view of the first, second and third coextrusion plates taken along the section XII-XII of Figure 11 (die mandrel not shown).

Figure 13 is a cross-sectional view of a calibrator in accordance with the present invention.

DESCRIPTION OF THE PREFERRED EMBODIMENT

The detailed embodiment of the present invention is disclosed herein. It should be understood, however, that the disclosed embodiment is merely exemplary of the invention, which may be embodied in various forms. Therefore, the details disclosed herein are not to be interpreted as limited, but merely as the basis for the claims and as a basis for teaching one skilled in the art how to make and/or use the invention.

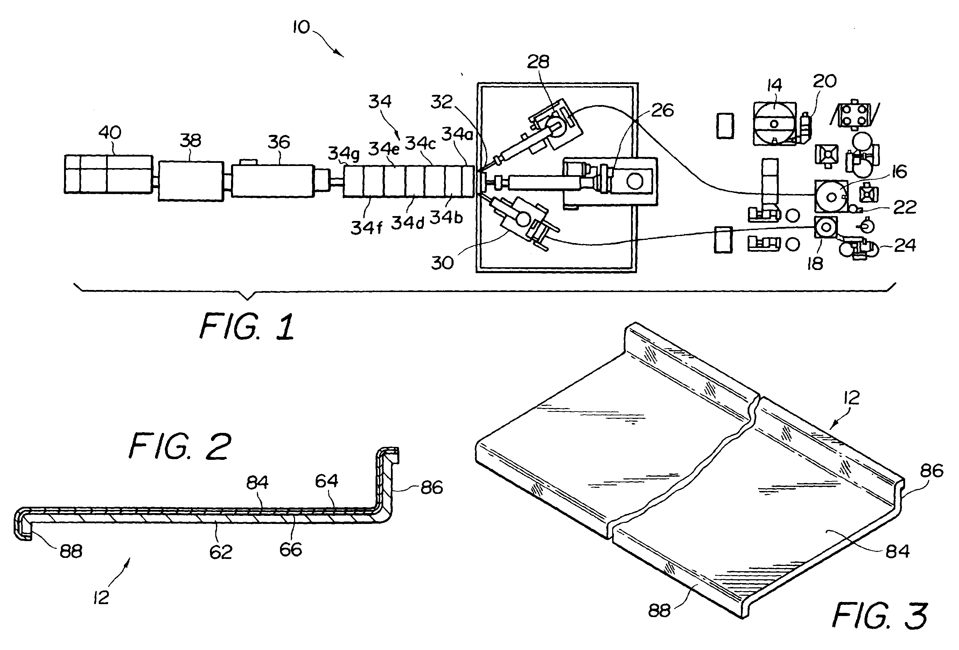

With reference to Figure 1, a coextrusion system 10 for extruding a foam core countertop profile 12 is disclosed. Generally, the system 10 includes a plurality of hoppers 14, 16, 18 coupled to conventional drying units 20, 22, 24, a plurality of extruders 26, 28, 30 respectively coupled to the hoppers, a coextrusion die 32, a calibrator assembly 34, a cooling tank 36, a puller 38 and a cutting assembly 40.

The hoppers 14, 16, 18 store the polymer pellets used during the extrusion process. Specifically, a substrate hopper 14 stores the pellets desired for the substrate, a surfacing hopper 16 stores the pellets desired for the decorative polymeric surfacing, and an opaque layer hopper 18 stores the pellets desired for the opaque layer. Each hopper 14, 16, 18 is respectively coupled to a drying assembly 20, 22, 24 which reduces the moisture content of the pellets. Preferably, the moisture content of the pellets should be as close to zero as possible to achieve optimal results.

In accordance with the preferred embodiment of the present invention, the hoppers and drying assemblies are preferably manufactured by UNIDYNE. Although specific hoppers and drying assemblies are disclosed herein, other hoppers and drying assemblies may be used without departing from the spirit of the present invention.

The system 10 includes a substrate extruder 26, a surfacing extruder 28 and an opaque layer extruder 30. The inlets of the extruders 26, 28, 30 are respectively coupled to the substrate hopper 14, the surfacing hopper 16 and the opaque layer hopper 18. The extruders 26, 28, 30 are coupled at their outlet ends to a coextrusion die 32, supplying the coextrusion die 32 with a flow of materials necessary for the production of the countertop profile 12. The extruders are conventional, and may take various forms without departing from the spirit of the present invention.

Each extruder 26, 28, 30 is provided with a hopper, feed throat, extruder entrance and extruder exit/orifice through which the countertop material is fed to the coextrusion die 32. The extruder exit for the substrate is located along the rear side 42 of the coextrusion die 32, the extruder exit for the decorative solid polymeric surfacing is located along the first lateral side 44 of the coextrusion die 32, and the extruder exit for the thin opaque layer is located along the second lateral side 46 of the coextrusion die 32. The three extruder exits feed countertop materials from the respective extruders 26, 28, 30 into the coextrusion die 32.

The substrate extruder 26 is preferably a twin screw extruder, while the surfacing and opaque layer extruders 28, 30 are preferably single screw extruders. The extruders are preferably manufactured by BATTENFELD, although other extruders may be used without departing from the spirit of the present invention.

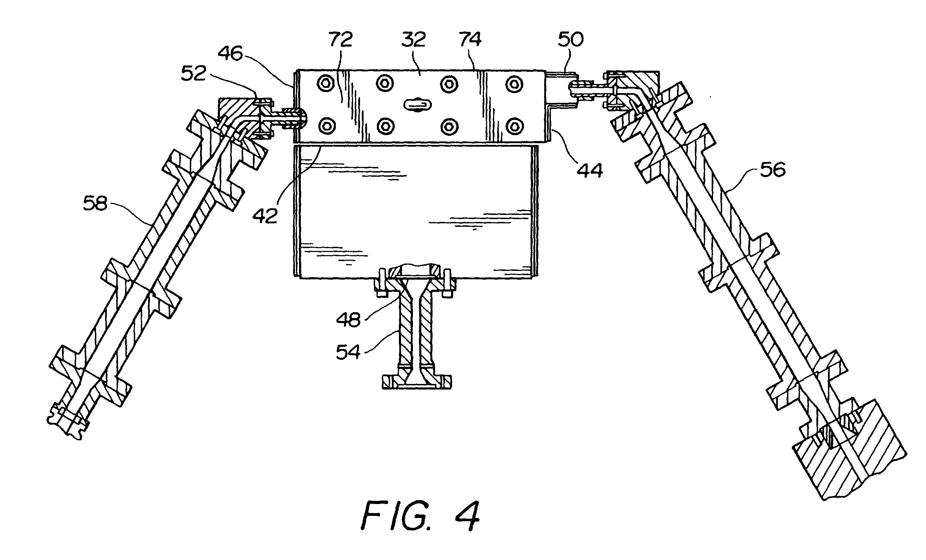

With reference to Figures 1 and 4, the substrate, surfacing and opaque layer extruders 26, 28, 30 are respectively coupled to the inlets 48, 50, 52 of the coextrusion die 32 by interface adapters 54, 56, 58. The interface adapters 54, 56, 58 decrease the flow width of the material exiting the extruders 26, 28, 30 to a flow width sized to flow within the inlet of the coextrusion die 32. Interface adapters are commonly used throughout the industry, and a variety of adapters may be used without departing from the spirit of the present invention.

In accordance with the preferred embodiment of the present invention, the substrate interface adapter 54 reduces the substrate extruder exit from a diameter of approximately 4 ½ inches (11.43 cm) to a diameter of approximately 2 inches (5.08 cm) and then expands the diameter to approximately 4 inches (10.16 cm) where it enters the substrate inlet 48 for the coextrusion die 32. Similarly, the polymeric interface adapter 56 reduces the polymeric surfacing material extruder exit from a diameter of approximately 3 ½ inches (8.89 cm) to a diameter of approximately 1 ½ inches (3.81 cm) at the die inlet 50 for the surfacing material and the opaque layer interface adapter 58 reduces the opaque layer extruder exit from a diameter of approximately 2 inches (5.08 cm) to a diameter of approximately 1 ½ inches (3.81 cm) at the die inlet 52 for the opaque layer material.

Briefly, the coextrusion die 32 provides a profile passageway 60 through which the countertop material is extruded. In accordance with the preferred embodiment of the present invention, and with reference to Figures 2 and 3, the countertop profile 12 is a three layer extrusion including a supportive foamed polymer substrate layer 62, a thin, solid polymeric surfacing layer 64 and a thin opaque layer 66 between the substrate layer 62 and the polymeric surfacing layer 64.

The coextrusion die 32 includes a die body 68 through which the extruded materials are passed. The die body 68 includes a top side 70, a bottom side 72, a front side 74, a rear side 42 and first and second lateral sides 44, 46.

As shown in Figure 2, 3 and 5, the coextrusion die outlet 82 provides a multilayer laminate generated with a countertop profile 12. That is, the profile 12 includes a top surface 84, a backsplash 86 and a front edge 88. While the disclosed embodiment includes a top surface 84, a backsplash 86 and a front edge 88 formed as a single unit, it is contemplated that the countertop profile 12 may be formed as separate pieces; for example, top surfaces, backsplashes and front edges. The resulting countertop preferably includes three continuous layers equally distributed along the length of the countertop profile 12. While the preferred profile 12 includes three layers, other layering arrangements may be employed without departing from the spirit of present invention.

As discussed above, the countertop profile 12 is preferably composed of a supportive foamed polymer substrate layer 62, a thin, solid polymeric surfacing layer 64 and a thin opaque layer 66 between the polymeric surfacing layer 64 and the substrate layer 62. The thin opaque layer 66 is employed to ensure that the substrate layer 62 will not be viewable through the solid polymeric surfacing 64.

Specifically, the foamed polymer substrate layer 62 is preferably composed of recycled poly(acrylonitrile-c-butadiene-c-styrene) (ABS) and may take on a variety of colors. As such, the opaque layer 66 is provided between the polymeric surfacing layer 64 and the substrate layer 62 to ensure that colors contained in the substrate layer 62 will not be seen through the polymeric surfacing layer 64.

A cross-sectional view of the resulting countertop profile 12 is shown in Figure 2. As discussed above, the resulting countertop includes a top surface 84, a backsplash 86, and a front edge 88. The thicknesses of the three layers along each section are maintained substantially equal. Specifically, the substrate layer 62 maintains a thickness of approximately 0.691 inches (1.755 cm) along the countertop profile 12, the opaque layer 66 maintains a thickness of approximately 0.010 inches (0.0254 cm) along the countertop profile 12 and the polymeric surfacing layer 64 maintains a thickness of approximately 0.050 inches (0.127 cm) along the countertop profile 12.

As discussed above, the substrate layer 62 is preferably a recycled poly (acrylonitrile-c-butadiene-c-styrene) (ABS) including various fillers, for example, calcium carbonate, WOLLASTINITE (a calcium silicate), glass fibers, etc. The substrate layer 62 may be the same as that disclosed in commonly owned U.S. Patent Application Serial No. 08/978,026, entitled "Polymeric Foam Substrate And Its Use As In Combination With Decorative Surfaces", filed November 25, 1997, which is incorporated herein by reference.

The solid polymeric surfacing layer 64 is the decorative outer layer of the countertop profile 12. The polymeric surfacing layer 64 is preferably an acrylic and includes various fillers designed to achieve the desired aesthetic effect. Similarly, the opaque layer 66 is preferably acrylic and provides an opaque layer between the substrate layer 62 and the polymeric surfacing layer 64.

Where acrylics are used as the surfacing and opaque layers in practicing the present invention, it has been found that the moisture content should be reduced as much as is commercially reasonable. Specifically, the acrylic should at least be dried to a moisture content less than approximately 0.08%. Where the untreated acrylic arrives with a moisture content of 0.212%, drying the acrylic for two hours reduces its moisture content to below approximately 0.08%. It has been found that better results are achieved when the moisture content is below approximately 0.05% (approximately three hours of drying required) and ideally approximately 0.02%, or less (approximately six hours of drying required). As such, and in accordance with the preferred embodiment of the present invention, the acrylics are dried for at least six hours prior to use to bring the moisture content to approximately 0.02% or less. As discussed above, drying takes place in a conventional manner using the hoppers and driers discussed above.

As to the ABS substrate layer, it has been found that two hours of drying are acceptable in accordance with the preferred embodiment of the present invention. Two hours of drying brings the moisture content from approximately 0.23% to 0.08%. Additional drying may be used to bring the moisture content to approximately 0.05% (four hours) and the moisture content will flatten at between 0.04% and 0.05% with further drying.

The resulting thicknesses of the various layers are accommodated by providing an extruder exit orifice with a diameter of approximately 4 ½ inches (11.43 cm) for the substrate material, an extruder exit orifice with a diameter of approximately 3 ½ inches (8.89 cm) for the polymeric surfacing material and an extruder exit orifice with a diameter of approximately 2 inches (5.08 cm) for the opaque layer material. However, the various layers may be adjusted to suit different material or profile characteristics without departing from the spirit of the present invention.

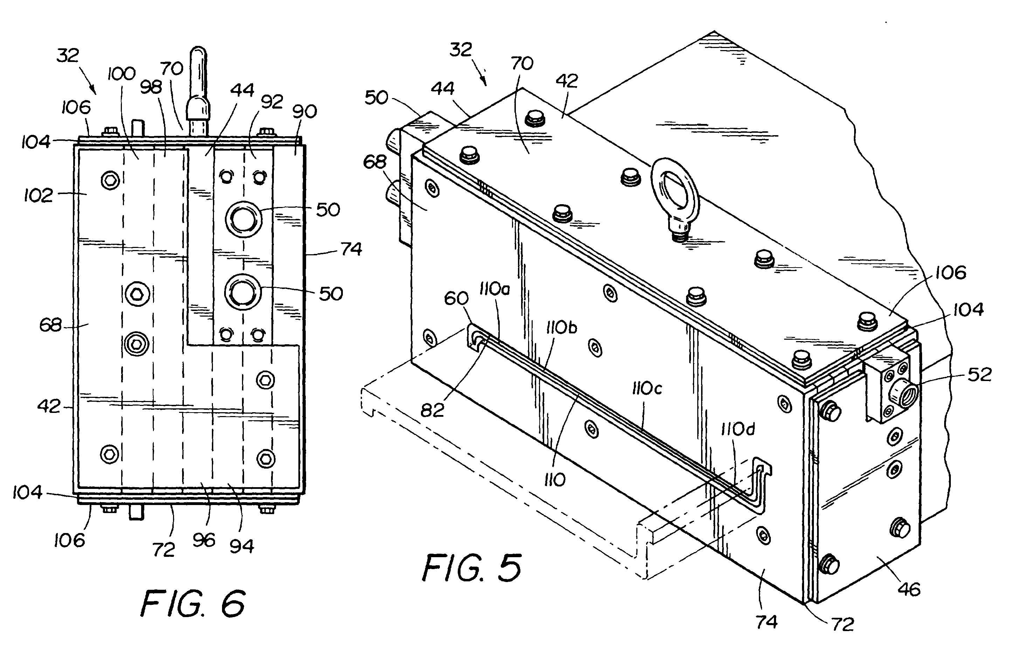

With reference to Figures 5 and 6, the coextrusion die 32 is composed of multiple parts secured together by a variety of screws and dowels in a manner commonly employed by those of ordinary skill in the art. Specifically, the coextrusion die 32 is composed of a first coextrusion plate 90, a second coextrusion plate 92, a third coextrusion plate 94, a fourth coextrusion plate 96, a fifth coextrusion plate 98, a sixth coextrusion plate 100 and a distribution plate 102. Each plate is approximately 3/4 inch (1.91 cm) thick, although plates of other thicknesses may be used without departing from the spirit of the present invention.

The plates are aligned and encased within a series of covers 104, which are in turn encased within a series of heat plates 106. The heat plates 106 provide the heat necessary to maintain material passing through the die 32 at a desired temperature during processing. The heat plates 106 are conventional plates used by those of ordinary skill in the art, and may take various forms without departing from the spirit of the present invention.

Substrate material supplied through the substrate extruder 26 initially passes through the distribution plate 102 and into the sixth coextrusion plate 100. The distribution plate 102 includes a series of slopes which evenly spread the substrate material within the coextrusion die 32 to achieve a uniform cross-sectional material flow within the profile passageway 60 of the coextrusion die 32. As those of ordinary skill in the art will certainly appreciate, a wide variety of distribution plates may be employed in accordance with the present invention.

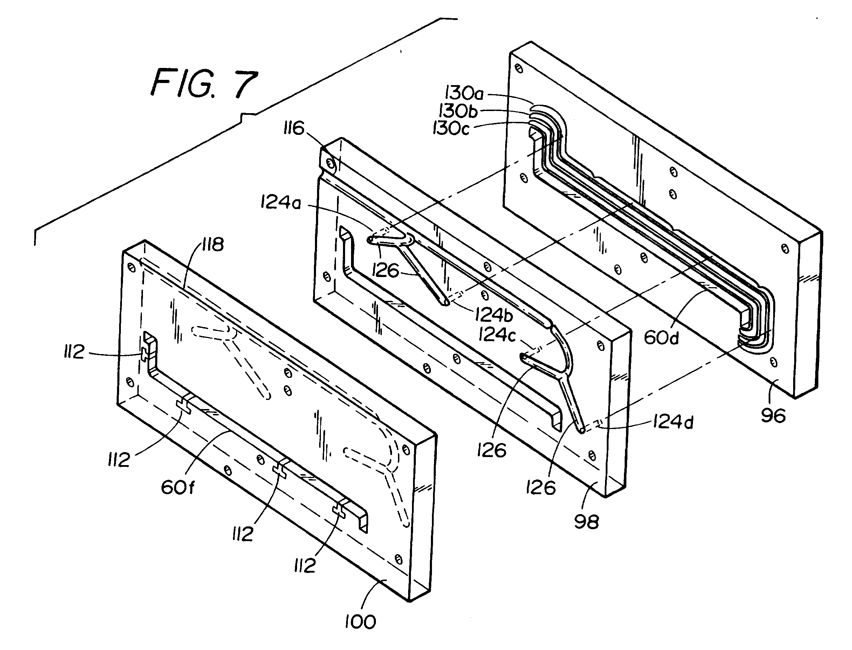

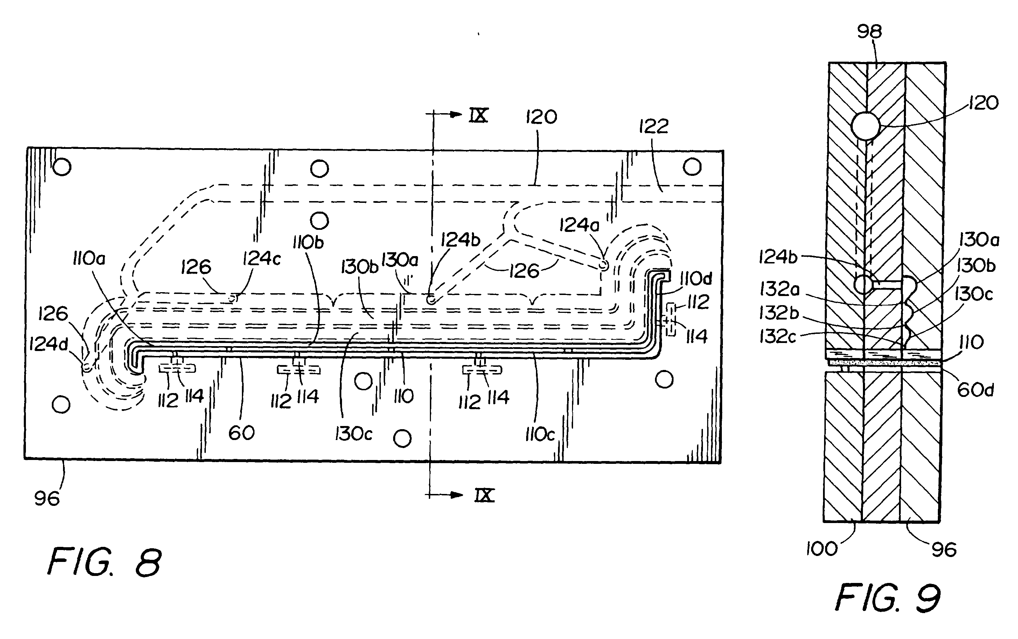

With reference to Figures 7, 8, and 9, the sixth coextrusion plate 100 includes a profile passageway 60f which is aligned with the distribution plate 102. The substrate material is directly supplied to the profile passageway 60 which extends from the beginning of the coextrusion die 32 to the outlet 82 of the coextrusion die 32.

The profile passageway 60f formed in the sixth coextrusion plate 100 is provided with a die mandrel 110. The die mandrel 110 splits the flow of substrate material into two streams which are later combined at the outlet 82 of the coextrusion die 32 where the substrate material is permitted to foam. The subsequent foaming and solidification of the substrate rely upon well known Celuka processing, for example, as described in "Thermoplastic Foams", James C. Throne, published by Sherwood Publishers (1996).

In view of the shape of the profile being extruded, the die mandrel 110 is composed of a first mandrel 110a, a second mandrel 110b, a third mandrel 110c and a fourth mandrel 110d. The mandrels 110a, 110b, 110c, 110d are matingly secured within the passageway profile 108 of the sixth coextrusion plate 100 by T-shaped receiving grooves 112 formed within the sixth coextrusion plate 100. The T-shaped receiving grooves 112 receive T-shaped extension members 114 formed on the mandrels 110a, 110b, 110c, 110d to properly secure the mandrels within the profile passageway 60f. The first, second, third and fourth mandrels 110a, 110b, 110c, 110d are linked to form a complete and uniform die mandrel 110 for splitting the flow of substrate material. The mandrel 110 extends through the complete coextrusion die 32 in a conventional manner when the coextrusion die 32 is fully assembled.

The fifth and sixth coextrusion plates 98, 100 continue the profile passageway 60 and create flow channels for the opaque layer material. The fifth coextrusion plate 98 includes a branched groove 116 which mates with a branched groove 118 formed in the sixth coextrusion plate 100 to form the flow channels 120 for the opaque layer material. The proximal end 122 of the flow channel 120 ends at the second lateral side 46 of the coextrusion die 32 and is adapted for coupling to the opaque layer extruder 30. Material ports 124 are formed in the distal ends 126 of the branched groove 116 of the fifth coextrusion plate 98 to create fluid communication between the flow channels 120 formed by the fifth and sixth coextrusion plates 98, 100 and the fourth coextrusion plate 96. Four material ports 124a, 124b, 124c, 124d are provided in accordance with the preferred embodiment. In order to ensure even distribution of the opaque layer material within the coextrusion die 32, the central material ports 124b, 124c are slightly larger than the material ports 124a, 124d located along the outer portion of the fifth coextrusion plate 98.

The fourth coextrusion plate includes a profile passageway 60d which continues the profile passageway created by the fifth and sixth coextrusion plates 98, 100. The fourth coextrusion plate 96 further includes a series of three grooves 130a, 130b, 130c in fluid communication with the opaque layer extruder 30. Specifically, the fourth coextrusion plate 96 includes three adjacent grooves 130a, 130b, 130c which substantially decrease in size as they extend toward the profile passageway 60d. The opaque layer material is first supplied to the largest first groove 130a and sequentially passes to the middle second groove 130b, the smallest third groove 130c and finally is combined with the substrate material in the profile passageway 60d.

The inclusion of the three grooves in the distribution of the opaque layer material ensures uniform distribution of the opaque layer along the countertop profile 12. With this in mind, the largest first groove 130a preferably includes a depth of approximately 0.225 inches (0.572 cm) and is connected to the middle second groove 130b by a landing 132a with a depth of 0.010 inches (0.025 cm). The middle second groove 130b has a depth of approximately 0.1875 inches (0.476 cm) and is connected to the smallest third groove 130c by a landing 132b with a depth of approximately 0.010 inches (0.025 cm). Finally, the smallest third groove 130c has a depth of approximately 0.125 inches (0.318 cm) and is connected to the profile passageway 60d by a landing 132c with a depth of approximately 0.010 inches (0.025 cm). As with the size of the material ports found in the fifth coextrusion plate 98, the landings 132a, 132b, 132c on the fourth coextrusion plate 96 are ground down slightly (approximately 0.003 inches) along the central portion of the fourth coextrusion plate 96 to ensure an even distribution of opaque layer material.

In use, the opaque layer material flows from the opaque layer extruder 30 to the distal ends 126 of the flow channels 120; where the opaque layer material flows through the material ports 124a, 124b, 124c, 124d therein and into the largest first groove 130a of the fourth coextrusion plate 96. As discussed above, the opaque layer material then sequentially passes to the middle second groove 130b, the smallest third groove 130c and finally is combined with the substrate material in the profile passageway 60d.

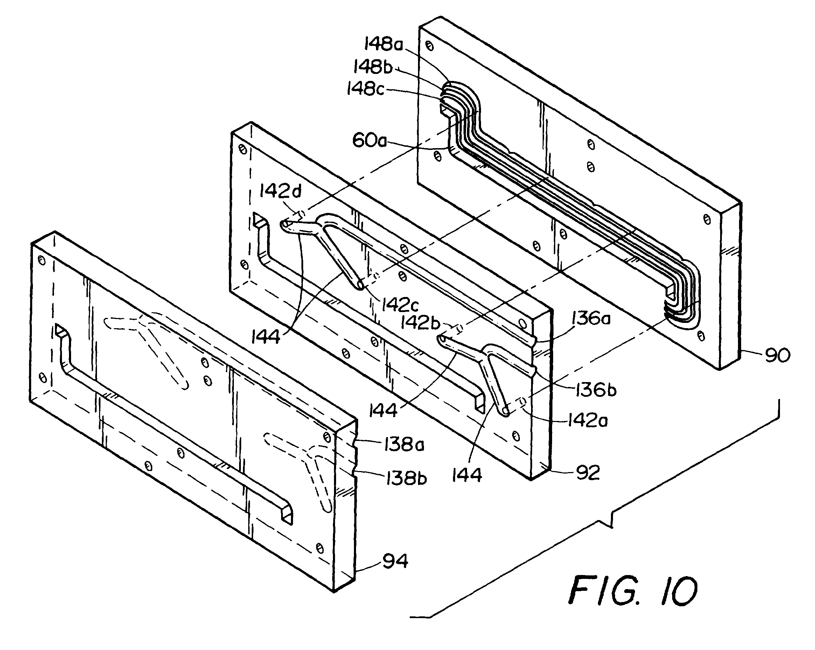

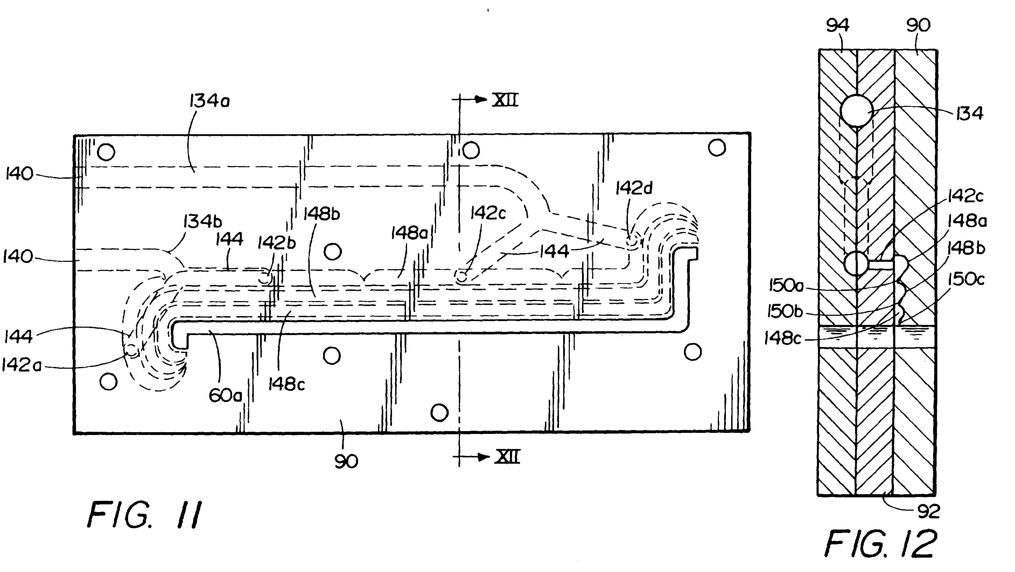

The polymeric surfacing is next applied with reference to the first, second and third coextrusion plates 90, 92, 94 as shown in Figures 10, 11 and 12. The second and third coextrusion plates 92, 94 continue the profile passageway 60 and create parallel flow channels 134a, 134b for the polymeric surfacing material. The second coextrusion plate 92 includes a pair of branched grooves 136a, 136b which mate with branched grooves 138a, 138b formed in the third coextrusion plate 94 to form the pair of flow channels 134a, 134b for the polymeric surfacing material. The proximal ends 140a, 140b of the flow channels 134a, 134b end at the first lateral side 44 of the coextrusion die 32 and are adapted for coupling to the polymeric surfacing extruder 28. Material ports 142a, 142b, 142c, 142d are formed at the distal ends 144 of the pair of branched grooves 136a, 136b in the second coextrusion plate 92 to create fluid communication between parallel flow channels 134a, 134b formed by the second and third coextrusion plates 92, 94 and the first coextrusion plate 90. As with the fifth coextrusion plate 98, the central material ports 142b, 142c are slightly larger than the material ports 142a, 142d located along the outer portion of the second coextrusion plate 92 to ensure even distribution of the polymeric surfacing material within the coextrusion die 32.

The first coextrusion plate 90 is substantially similar to the fourth coextrusion plate 96. The first coextrusion plate 90 includes a profile passageway 60a which is coupled to the profile passageway 60 created by the second and third coextrusion plates 92, 94. The first coextrusion plate 90 further includes a series of three grooves 148a, 148b, 148c in fluid communication with the polymeric surfacing extruder 28. Specifically, the first coextrusion plate 90 includes three adjacent grooves 148a, 148b, 148c which substantially decrease in size as they extend toward the profile passageway 60a. The polymeric surfacing material is first supplied to the largest first groove 148a and sequentially passes to the middle second groove 148b, the smallest third groove 148c and finally is combined with the substrate material in the profile passageway 60a.

As with the fourth coextrusion plate 96, the inclusion of the three grooves in the distribution of the polymeric surfacing material ensures uniform distribution of the polymeric surfacing layer 64 along the countertop profile 12. With this in mind, the largest first groove 148a preferably includes a depth of approximately 0.295 inches (0.749 cm) and is connected to the middle second groove 148b by a landing 150a with a depth of approximately 0.045 inches (0.114 cm). The middle second groove 148b has a depth of approximately 0.233 inches (0.592 cm) and is connected to the smallest third groove 148c by a landing 150b with a depth of approximately 0.045 inches (0.114 cm). Finally, the smallest third groove 148c has a depth of approximately 0.170 inches (0.432 cm) and is connected to the profile passageway 60a by a landing 150c with a depth of approximately 0.045 inches (0.114 cm). To ensure the even distribution of polymeric surfacing material within the coextrusion die 32, the landings on the first coextrusion plate 90 are ground down slightly (approximately 0.003 inches) along the central portion of the first coextrusion plate 90.

In use, the polymeric surfacing material flows from the polymeric surfacing extruder 28 to the distal ends 144 of the flow channels 134a, 134b, where the polymeric surfacing material flows through the ports 142a, 142b, 142c, 142d within the second coextrusion plate 92 and into the largest first groove 148a of the first coextrusion plate 90. As discussed above, the polymeric surfacing material then sequentially passes to the middle second groove 148b, the smallest third groove 148c and finally is combined with the substrate material in the profile passageway 60a.

While the preferred system for bringing the multiple layers of the countertop profile 12 together has been disclosed above, other techniques may be employed without departing from the spirit of the present invention.

As discussed above, the flow channels formed within the coextrusion die 32 permit equal quantities of materials to be spread along the countertop profile 12. As those of ordinary skill in the art will appreciate, the flow channel design is created based upon the well known relationship

$$P = VR^3Q$$

where,

P = pressure drop across the die;
V = viscosity of the fluid material;
R = material's resistance to flow; and
Q = flow rate.

However, the flow channel design is highly complicated by the foaming agents used in the ABS extrusion. These complications are countered in the present system by employing the Celuka process in the downstream design of the present die. Specifically, the substrate is formed with a mandrel 110 dividing the material flow into parallel streams which are permitted to foam inwardly at a predetermined position within the coextrusion die 32.

The skin and center formation of the substrate are further enhanced in a calibrator assembly 34 which provides additional cooling to create an ABS substrate exhibiting a high density skin and a lower density core. In accordance with the preferred embodiment of the present invention, the calibrator assembly 34 includes seven calibrators 34a-g provided in series for throughly cooling the countertop profile 12. The calibrators 34a-g are ideally cooled to a temperature of approximately 45°F-55°F (7°C-13°C), bringing tremendous cooling force to the countertop profile 12 passing therethrough. As those of ordinary skill in the art will certainly appreciate, it would certainly be acceptable to use lower temperatures for the calibrators if feasible.

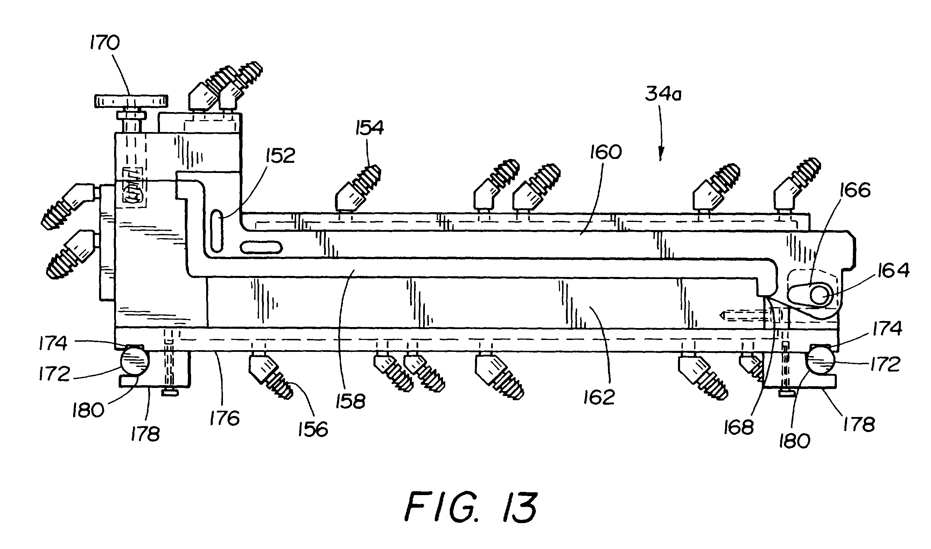

With reference to Figure 13, one of the calibrators 34a is disclosed in greater detail. The disclosed calibrator 34a is merely representative of the other calibrators, since the seven calibrators used in accordance with the preferred embodiment of the present invention are substantially identical.

The calibrator 34a receives the countertop profile 12 formed within the coextrusion die 32 and cools the profile 12 under controlled conditions. With this in mind, the calibrator 34a includes a plurality of coolant passages 152 with inlets 154 and outlets 156 for the passage of coolant therethrough.

As with the coextrusion die 32, the calibrator 34a is composed of multiple parts secured together with screws and dowels. The multiple parts create a profile passageway 158 identical to the countertop profile 12 produced by the coextrusion die 32.

Specifically, the calibrator 34a includes an upper calibrator member 158 pivotally coupled to a lower stationary calibrator member 162. A hinge 164 connects the upper calibrator member 160 and the lower calibrator member 162 such that they meet at a position below the center of the countertop profile 12. The positioning of the hinge 164 is facilitated by the provision of an offset 166 within the hinge 164. The offset 166 permits the upper calibrator member 160 to be moved laterally relative to the lower calibrator member 162 before the upper calibrator member 160 is rotated to provide access to the internal structure of the calibrator 34a. The hinge 164 construction and position are very important and ensure that no undesirable markings are left on the finished countertop profile 12.

The meeting point 168 of the upper calibrator member 160 and the lower calibrator member 162 is located at a position on the underside of the countertop profile 12. As such, any grooves formed as a result of the meeting point 168 between the upper calibrator member 160 and the lower calibrator member 162 will ultimately be hidden from view when the countertop profile 12 is properly installed.

The upper calibrator member 160 and the lower calibrator member 162 are held in their closed position by a spring biased latch 170 coupled to the lower calibrator member 162. The latch 170 is selectively used to securely couple the upper calibrator member 160 and the lower calibrator member 162 in their closed position.

The calibrators 34a-g are supported upon a pair of support bars 172. The calibrator 34a is, therefore, provided with grooves 174 along its underside 176 to ensure alignment with the support bars 172. The calibrator 34a is securely coupled to the support bars 172 by a series of brackets 178 clamping the support bars 172 to the underside 176 of the calibrator 34a. The brackets 178 include a curved mating surface 180 which substantially matches the curvature of the support bars 172. In this way, greater contacting surface area is provided between the brackets 178 and the support bars 172, ensuring a very secure connection.

After leaving the calibrator assembly 34, the countertop profile 12 is ready for final processing. The final processing steps are similar to those employed in most extrusion manufacturing systems, and those of ordinary skill in the art should be well versed in the steps taken to prepare an extruded product once it has been formed in the die 32 and calibrator 34.

Specifically, upon leaving the calibrator assembly 34, the countertop profile 12 is drawn through a cooling tank 36. The cooling tank 36 is conventional and includes a continuously flowing supply of a cooling liquid. The cooling liquid contacts the countertop profile 12 to further cool the countertop profile 12. The cooling tank 36 includes supports matching the shape of the extruded countertop such that the shape of the countertop profile is not adjusted as it passes through the cooling tank 36.

Upon leaving the cooling tank 36, a puller 38 engages the extruded countertop profile 12 to help maintain movement of the countertop profile 12 through the system 10 without altering the shape of the countertop profile 12. As those of ordinary skill in the art will certainly appreciate, the puller 38 is synchronized with the extruders 26, 28, 30 to move the countertop profile 12 through the system 10 without bunching or stretching the countertop profile 12.

While the puller 38 used in accordance with the present invention is substantially similar to those found throughout the industry, the puller 38 is preferably built to accommodate the large size of the countertop profile 12 being extruded. The puller 38 is accordingly design with the ability to pull at 30 kilonewtons. This is substantially larger than pullers conventionally used throughout the industry, and ensures that the puller 38 has adequate power to properly move the countertop profile 12.

After leaving the puller 38 the countertop profile 12 enters the cutting assembly 40. The cutting assembly 40 follows conventional design techniques those of ordinary skill in the art will certainly appreciate. Briefly, the cutting assembly 40 includes a support shaped to match the profile of the countertop profile 12. The cutting assembly 40 also includes a cutting blade designed to selectively engage the extruded countertop profile 12 for cutting the countertop profile 12 to a desired length.

When processing countertops in accordance with the present invention, the materials are extruded at a rate of 2.3 ft/hr (0.7 m/hr). In addition, the die is maintained at a temperature of approximately 380°F to 420°F (193°C to 216°C), the substrate extruder is maintained at a temperature of approximately 300°F to 375°F (149°C to 191°C), the opaque layer extruder is maintained at a temperature of approximately 380°F to 440°F (193°C to 227°C), the polymeric surfacing extruder is a maintained at a temperature of approximately 380°F to 475°F (193°C to 246°C), and the calibrator is preferably maintained at a temperature of approximately 45°F to 55°F (7°C to 13°C).

While the preferred embodiment has been shown and described, it will be understood that there is no intent to limit the invention by such disclosure, but rather, is intended to cover all modifications and alternate constructions falling within the spirit and scope of the invention as defined in the appended claims.

**Claims**

1. An extrusion system for the production of a countertop, the extrusion system comprising:

   an extrusion die having a profile which replicates the shape of a countertop, the extrusion die including a plurality of extruder entrances through which countertop material is supplied to the extrusion die and a die outlet from which the extruded countertop profile departs.

2. The system according to claim 1, wherein the profile is that of a complete countertop and includes a top surface, a backsplash and a front edge.

3. The system according to claim 1 or 2, wherein the extrusion die is a coextrusion die.

4. The system according to any of the preceding claims, wherein the coextrusion die includes a mandrel.

5. The system according to any of the preceding claims, wherein the extrusion die employs Celuka processing.

6. The system according to any of the preceding claims, wherein the coextrusion die includes three extruder entrances for supplying a substrate material, a surfacing material and a middle opaque layer material.

7. The system according to any of the preceding claims, further including a calibrator positioned adjacent the die outlet of the extrusion die to receive the extruded countertop profile as it exits the extrusion die, the calibrator includes a calibrator passageway which is substantially the same shape as the extruded countertop profile exiting the coextrusion die.

8. The system according to any of the preceding claims, wherein the calibrator includes fluid lines for cooling the calibrator and the extruded profile passing therethrough.

9. The system according to any of the preceding claims, wherein the extrusion die includes a mandrel.

10. The system according to any of the preceding claims, wherein the extrusion die employs Celuka processing.

11. The system according to any of the preceding claims, wherein the extrusion die is constructed from a plurality of parallel plates.

12. The system according to any of the preceding claims, wherein the extrusion die is-a coextrusion die.

13. The system according to any of the preceding claims, wherein the coextrusion die includes a mandrel.

14. The system according to any of the preceding claims, wherein the extrusion die employs Celuka processing.

15. The system according to any of the preceding claims, wherein the coextrusion die includes three extruder entrances for supplying a substrate material, a surfacing material and a middle opaque layer material.

16. The system according to any of the preceding claims, further including a calibrator positioned adjacent the die outlet of the extrusion die to receive the extruded countertop profile as it exits the extrusion die, the calibrator includes a calibrator passageway which is substantially the same shape as the extruded countertop profile exiting the coextrusion die.

17. A countertop profile manufactured by the process characterized by the following steps:

extruding a countertop profile through an extrusion die having a profile which replicates the shape of a countertop, the extrusion die including a plurality of extruder entrances through which countertop material is supplied to the extrusion die and a die outlet from which the extruded countertop profile departs; cooling the extruded countertop profile through a calibrator positioned adjacent the die outlet of the coextrusion die to receive the extruded countertop profile as it exits the coextrusion die, the calibrator includes a calibrator passageway which is substantially the same shape as the extruded countertop profile exiting the extrusion die.

18. The foam core countertop profile according to any of the preceding claims, wherein the extrusion die is a coextrusion die.

19. The foam core countertop profile according to any of the preceding claims, wherein the countertop profile includes a top surface, a backsplash and a front edge.

20. The foam core countertop profile according to any of the preceding claims, wherein the step of extruding includes extruding a three layer extruded countertop profile.

21. The foam core countertop profile according to any of the preceding claims, wherein the extruded countertop profile includes a foam substrate, a polymeric surfacing and an opaque layer between the foam substrate and the polymeric surfacing.

22. The foam core countertop profile according to any of the preceding claims, wherein the foam substrate is ABS.

23. The foam core countertop profile according to any of the preceding claims, wherein the polymeric surfacing is acrylic.

24. The foam core countertop profile according to any of the preceding claims, wherein the opaque layer is acrylic.

25. The foam core countertop profile according to any of the preceding claims, wherein the step of extruding includes extruding a three layer extruded countertop profile.

26. The foam core countertop profile according to any of the preceding claims, wherein the extruded countertop profile includes a foam substrate, a polymeric surfacing and an opaque layer between the foam substrate and the polymeric surfacing.

27. The foam core countertop profile according to any of the preceding claims, wherein the foam substrate is ABS.

28. The foam core countertop profile according to any of the preceding claims, wherein the polymeric surfacing is acrylic.

29. The foam core countertop profile according to any of the preceding claims, wherein the opaque layer is acrylic.

30. An extruded foam core countertop profile comprising:

a foam substrate;
a polymeric surfacing layer; and
an opaque layer positioned between the foam substrate and the polymeric surfacing layer.

31. The foam core countertop profile according to any of the preceding claims, wherein the countertop profile includes a top surface, a backsplash and a front edge.

**32.** The foam core countertop profile according to any of the preceding claims, wherein the substrate is ABS.

**33.** The foam core countertop profile according to any of the preceding claims, wherein the substrate is approximately .690 inches thick.

**34.** The foam core countertop profile according to any of the preceding claims, wherein the polymeric surfacing layer is acrylic.

**35.** The foam core countertop profile according to any of the preceding claims, wherein the polymeric surfacing layer is approximately .045 inches thick.

**36.** The foam core countertop profile according to any of the preceding claims, wherein the opaque layer is acrylic.

**37.** The foam core countertop profile according to any of the preceding claims, wherein the polymeric surfacing layer is approximately .010 inches thick.

**38.** The foam core countertop profile according to any of the preceding claims, wherein the substrate is ABS.

**39.** The foam core countertop profile according to any of the preceding claims, wherein the substrate is approximately .690 inches thick.

**40.** The foam core countertop profile according to any of the preceding claims, wherein the polymeric surfacing layer is acrylic.

**41.** The foam core countertop profile according to any of the preceding claims, wherein the polymeric surfacing layer is approximately .045 inches thick.

**42.** The foam core countertop profile according to any of the preceding claims, wherein the opaque layer is acrylic.

**43.** The foam core countertop profile according to any of the preceding claims, wherein the polymeric surfacing layer is approximately .010 inches thick.

**44.** A calibrator for use in the manufacture of extruded products wherein the extruded product includes a top surface exposed to consumers and a bottom surface which is not viewed by consumers when the extruded product is used for its intended purpose, characterizing:

an upper calibrator pivotally coupled to a lower stationary calibrator, wherein the upper calibrator and the lower calibrator meet at a position located along the bottom side of the extruded product such that any marking created by meeting of the upper calibrator and the lower calibrator is not seen by a consumer when the extruded product is properly used.

**45.** The calibrator according to any of the preceding claims, further including a hinge pivotally coupling the upper calibrator to the lower calibrator, the hinge including an offset allowing the upper calibrator to laterally move relative to the lower calibrator.

**46.** The calibrator according to any of the preceding claims, wherein the offset includes a pivot pin mounted within an oblong recess allowing the upper calibrator to move laterally relative to the lower calibrator.

**47.** The calibrator according to any of the preceding claims, further including a spring biased latch selectively locking the upper calibrator and the lower calibrator in a closed position.

**48.** The calibrator according to any of the preceding claims, further including a bracket mounting the calibrator to a support assembly, wherein the bracket is provided with a contour substantially matching the support assembly which it engages to thereby improve the mounting of the calibrator on the support assembly.

**49.** A coextrusion die adapted for the continuous manufacture of a multilayer product, characterizing:

a plurality of coextrusion plates held together to create a die body;
each of the coextrusion plates including a profile passageway shaped to conform to the multilayer product to be formed within the coextrusion die; and
at least one flow channel formed between adjacent coextrusion plates, the flow channel being in fluid communication with the profile passageway at a first end and an exterior die inlet port such that the at least one flow channel couple the profile passageway with at least one material supply member.

**50.** The coextrusion die according to any of the preceding claims, wherein the plurality of coextrusion plates are substantially planar members held together in a parallel arrangement.

**51.** The coextrusion die according to any of the preceding claims, wherein the at least one flow channel is formed by matching grooves formed on adjacent coextrusion plates such that the flow channel is formed when the adjacent plates are placed together to form the die body.

52. The coextrusion die according to any of the preceding claims, wherein the flow channel is in fluid communication with the profile passageway via a fluid port extending through one of the adjacent coextrusion plates forming the flow channel.

53. The coextrusion die according to any of the preceding claims, wherein a plurality of fluid ports connect the flow channel to the profile passageway, and the plurality of fluid ports are of different sizes to ensure proper distribution of material within the profile passageway.

54. The coextrusion die according to any of the preceding claims, wherein a plurality of grooves and landings are positioned between the flow channel and the profile passageway to ensure uniform mixing of the extruded material.

55. The coextrusion die according to any of the preceding claims, including at least two distinct flow channels supplying material for different layers of the extruded product.

56. The coextrusion die according to any of the preceding claims, wherein each flow channel is formed by matching grooves formed on adjacent coextrusion plates such that the flow channels are formed when the adjacent plates are placed together to form the die body.

57. The coextrusion die according to any of the preceding claims, wherein the flow channels are in fluid communication with the profile passageway via fluid ports extending through one of the adjacent coextrusion plates forming the flow channels.

58. The coextrusion die according to any of the preceding claims, wherein a plurality of fluid ports connect the flow channels to the profile passageway, and the plurality of fluid ports are of different sizes to ensure proper distribution of material within the profile passageway.

59. The coextrusion die according to any of the preceding claims, wherein a plurality of grooves and landings are positioned between the flow channels and the profile passageway to ensure uniform mixing of the extruded material.

60. The coextrusion die according to any of the preceding claims, wherein the extruded product is a countertop including a top surface, a backsplash and front edge.

61. The coextrusion die according to any of the preceding

ing claims, including at least two distinct flow channels supplying material for different layers of the extruded product.

62. The coextrusion die according to any of the preceding claims, wherein each flow channel is formed by matching grooves formed on adjacent coextrusion plates such that the flow channels are formed when the adjacent plates are placed together to form the die body.

63. The coextrusion die according to any of the preceding claims, wherein the flow channels are in fluid communication with the profile passageway via fluid ports extending through one of the adjacent coextrusion plates forming the flow channel.

64. The coextrusion die according to any of the preceding claims, wherein a plurality of fluid ports connect the flow channels to the profile passageway, and the plurality of fluid ports are of different sizes to ensure proper distribution of material within the profile passageway.

65. The coextrusion die according to any of the preceding claims, wherein a plurality of grooves and landings are positioned between the flow channels and the profile passageway to ensure uniform mixing of the extruded material.

66. A process for the coextrusion of a multilayer product, characterizing the following steps:

　　　　drying an acrylic material to be used in the extrusion of the multilayer product such that it has a moisture content less than approximately 0.05%;
　　　　drying a substrate material to be used in the extrusion of the multilayer product; and
　　　　coextruding the acrylic material and the substrate material to form the extruded product.

67. The coextrusion process according to any of the preceding claims, wherein the acrylic material is used to form a decorative surfacing layer.

68. The coextrusion process according to any of the preceding claims, wherein the substrate is ABS.

69. The coextrusion process according to any of the preceding claims, further including the step of drying an opaque layer material which is subsequently extruded between the acrylic material and the substrate material.

70. The coextrusion process according to any of the preceding claims, wherein the opaque layer material is an acrylic and the opaque layer material is dried such that it has a moisture content less than approximately 0.05%.

**71.** The coextrusion process according to any of the preceding claims, wherein the step of drying the acrylic material includes drying the acrylic material to be used in the extrusion of the multilayer product such that it has a moisture content of approximately 0.02% or less.

FIG. 1

FIG. 2

FIG. 3

FIG. 4

FIG. 6

FIG. 5

EP 0 997 088 A1

FIG. 7

FIG. 8

FIG. 9

EP 0 997 088 A1

17

FIG. IO

FIG. 11

FIG. 12

EP 0 997 088 A1

FIG. 13

EP 0 997 088 A1

**European Patent Office**

# EUROPEAN SEARCH REPORT

Application Number

EP 99 12 0875

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 733 022 A (WHETSTONE WILLIAM F) 31 March 1998 (1998-03-31)<br><br>* abstract *<br>* figures 1-4 * | 1-5,7, 10,11, 13,16-19 | A47B77/02 B29C47/06 B32B31/30 |
| Y | | 6,8,9, 12,14,15 | |
| X | US 2 646 326 A (STANITZ) 21 July 1953 (1953-07-21)<br>* column 3, line 4 - line 45; figures 1-7 * | 10,11, 17-19 | |
| A | | 1-3,5 | |
| Y | EP 0 169 572 A (DISPLAY A S D) 29 January 1986 (1986-01-29)<br>* abstract; figures 1,2 * | 6,12 | |
| Y | GB 1 310 778 A (KUNSTSTOFF GMBH) 21 March 1973 (1973-03-21)<br>* the whole document * | 9,15 | |
| Y | FR 407 772 A (TISSIER)<br>* abstract; figures 1-3 * | 8,14 | TECHNICAL FIELDS SEARCHED (Int.Cl.7)<br>B29C<br>A47B<br>B32B |
| X | US 4 221 624 A (ESLINGER HAYNES L ET AL) 9 September 1980 (1980-09-09)<br>* the whole document * | 17-43, 49-71 | |
| X | US 4 685 879 A (PUERSTINGER FRANZ ET AL) 11 August 1987 (1987-08-11)<br>* the whole document * | 44-48 | |
| X | US 5 795 641 A (KING NOEL E ET AL) 18 August 1998 (1998-08-18)<br>* column 3, line 62 - column 4, line 3 *<br>* column 4, line 43 - line 55 *<br>* claims; figures 1-3 * | 49-65 | |

-/--

The present search report has been drawn up for all claims

| Place of search | Date of completion of the search | Examiner |
|---|---|---|
| THE HAGUE | 21 December 1999 | Jensen, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 99 12 0875

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | DATABASE WPI<br>Section Ch, Week 197410<br>Derwent Publications Ltd., London, GB;<br>Class A13, AN 1974-18065V<br>XP002125343<br>-& JP 48 022167 A (HITACHI SHIPBUILDING CO LTD), 20 March 1973 (1973-03-20)<br>* abstract * | 17-43 | |
| A | US 4 206 165 A (DUKESS JOSEPH)<br>3 June 1980 (1980-06-03)<br>* column 3, line 2 - line 52 *<br>* claims; figures * | 17-43 | |
| A | DE 197 14 052 A (BRAMSIEPE ROBERT)<br>8 October 1998 (1998-10-08)<br>* the whole document * | 44-48 | |

TECHNICAL FIELDS
SEARCHED (Int.Cl.7)

The present search report has been drawn up for all claims

| Place of search | Date of completion of the search | Examiner |
|---|---|---|
| THE HAGUE | 21 December 1999 | Jensen, K |

## ANNEX TO THE EUROPEAN SEARCH REPORT
## ON EUROPEAN PATENT APPLICATION NO.          EP 99 12 0875

This annex lists the patent family members relating to the patent documents cited in the above-mentioned European search report.
The members are as contained in the European Patent Office EDP file on
The European Patent Office is in no way liable for these particulars which are merely given for the purpose of information.

21-12-1999

| Patent document cited in search report | | Publication date | Patent family member(s) | | Publication date |
|---|---|---|---|---|---|
| US 5733022 | A | 31-03-1998 | NONE | | |
| US 2646326 | A | 21-07-1953 | NONE | | |
| EP 0169572 | A | 29-01-1986 | DK | 366184 A | 27-01-1986 |
| | | | NO | 852945 A | 27-01-1986 |
| GB 1310778 | A | 21-03-1973 | BE | 771355 A | 31-12-1971 |
| | | | FR | 2106214 A | 28-04-1972 |
| | | | NL | 7111309 A | 29-02-1972 |
| FR 407772 | A | | NONE | | |
| US 4221624 | A | 09-09-1980 | NONE | | |
| US 4685879 | A | 11-08-1987 | EP | 0207064 A | 30-12-1986 |
| US 5795641 | A | 18-08-1998 | US | 5538777 A | 23-07-1996 |
| | | | US | 5965075 A | 12-10-1999 |
| | | | AU | 683083 B | 30-10-1997 |
| | | | AU | 7556694 A | 22-03-1995 |
| | | | CA | 2170776 A | 09-03-1995 |
| | | | CN | 1129918 A | 28-08-1996 |
| | | | EP | 0722385 A | 24-07-1996 |
| | | | JP | 9501879 T | 25-02-1997 |
| | | | NZ | 271801 A | 27-07-1997 |
| | | | WO | 9506554 A | 09-03-1995 |
| JP 48022167 | A | 04-07-1973 | NONE | | |
| US 4206165 | A | 03-06-1980 | DE | 2924472 A | 28-02-1980 |
| | | | FI | 792489 A,B, | 15-02-1980 |
| | | | FR | 2433408 A | 14-03-1980 |
| | | | GB | 2030919 A,B | 16-04-1980 |
| DE 19714052 | A | 08-10-1998 | EP | 0869219 A | 07-10-1998 |

EPO FORM P0459

For more details about this annex : see Official Journal of the European Patent Office, No. 12/82